# EUROPEAN PATENT APPLICATION

(11) **EP 2 323 404 A1**
(43) Date of publication of application: **18.05.2011**
(21) Application number: 09176198.1
(22) Date of filing: 17.11.2009
(51) Int. Cl.: H04N 7/26, H04N 7/50

(54) **Additional information for in-loop video deblocking**

(71) Applicant: RESEARCH IN MOTION LIMITED, Waterloo, Ontario N2L 3W8 (CA)
(72) Inventor: Zan, Jinwen, Waterloo Ontario N2L 5Z5 (CA); He, Dake, Waterloo Ontario N2L 5Z5 (CA); Yang, En-hui, Waterloo Ontario N2L 5Z5 (CA)
(74) Representative: Patel, Binesh

(57) **Abstract**

A video encoder sends at least some information regarding boundary strength to the decoder along with the bitstream of encoded video. The decoder is configured to use the received boundary strength information from the encoder to reduce the number of computations necessary for the decoder to determine the boundary strength details required for performing deblocking when decoding the bitstream.

## Description

### FIELD

The present application generally relates to video encoding and decoding and, in particular, to methods and devices for performing in-loop deblocking of video.

### BACKGROUND

Advances in video encoding/decoding have enabled the use of video media in a wide variety of contexts and devices. In some cases, mobile/handheld devices are configured to decode and display video media. Where bandwidth permits, encoded video may even be received over a wireless communications channel and decoded and displayed in real-time.

The advances in video encoding/decoding that have made it possible to transmit video media over bandwidth-limited channels involve some very complicated computational operations to encode and decode the media and in order to achieve the degree of compression and quality required. In some situations, such as with mobile handheld devices, the computational resources available to perform decoding are limited.

The current state of the art for video encoding is the ITU-T H.264/AVC video coding standard. It defines a number of different profiles for different applications, including the Baseline profile and others. Even with the Baseline profile targeting mobile devices, the complex operations involved in encoding and decoding are computationally demanding.

It would be advantageous to provide for methods and devices that reduce the computational burden on the decoder while remaining compliant with current video coding standards to a large extent.

### BRIEF SUMMARY

The present application discloses an encoder that sends at least some information regarding boundary strength to the decoder. The decoder is configured to use the received boundary strength information from the encoder to reduce the number of computations necessary for the decoder to determine the boundary strength details required for performing deblocking.

In one aspect, the present application describes a method of decoding a slice of video. The method includes receiving a bitstream of encoded video and at least some associated boundary strength information, and decoding the encoded video to reconstruct the slice of video, including determining whether to apply a deblocking filter to transform block edges within the slice. For at least one of the transform blocks the determination of whether to apply the deblocking filter is based on the received associated boundary strength information.

In another aspect, the present application describes a decoder for decoding a slice of video. The decoder includes a processor, a memory, a communications system for receiving a bitstream of encoded video and at least some associated boundary strength information, and a decoding module stored in memory and containing instructions for configuring the processor to decode the encoded video to reconstruct the slice of video. The decoding module is configured to determine whether to apply a deblocking filter to transform block edges within the slice. For at least one of the transform blocks the determination of whether to apply the deblocking filter is based on the at least some associated boundary strength information.

In another aspect, the present application describes a method of transmitting a slice of video. The method includes encoding the slice of video in accordance with a video encoding protocol to create a bitstream, wherein the video encoding protocol specifies in-loop deblocking at the decoder, and wherein encoding includes applying deblocking to the slice of video in a motion compensation loop, the deblocking including calculating boundary strength information for the slice of video. The method further includes transmitting the bitstream and at least some associated boundary strength information.

In another aspect, the present application discloses an encoder for encoding a slice of video. The encoder includes a processor; memory; a communications system; and a video encoding module stored in memory and containing instructions for configuring the processor to encode the slice of video in accordance with a video encoding protocol to create a bitstream, wherein the video encoding protocol specifies in-loop deblocking at the decoder, and wherein the video encoding module configures the processor to apply deblocking to the slice of video in a motion compensation loop, the deblocking including calculating boundary strength information for the slice of video. The video encoding module contains instructions for configuring the communications system to transmit the bitstream and at least some associated boundary strength information.

### BRIEF DESCRIPTION OF THE DRAWINGS

Reference will now be made, by way of example, to the accompanying drawings which show example embodiments of the present application, and in which:

Figure 1 shows a block diagram of an encoder in accordance with the present application;

Figure 2 shows a block diagram of a decoder in accordance with the present application;

Figure 3 diagrammatically illustrates the division of a video frame into macroblocks and transform blocks;

Figure 4 diagrammatically shows the boundary definitions for a macroblock;

Figure 5 shows an example macroblock-level boundary strength map (BSM) for an example frame of video;

Figure 6 shows a block diagram of another example encoder according to the present application;

Figure 7 shows, in flowchart form, an example method of performing decoding in accordance with the present application; and

Figure 8 shows a block diagram of an example embodiment of a decoder.

Similar reference numerals may have been used in different figures to denote similar components.

### DESCRIPTION OF EXAMPLE EMBODIMENTS

In some embodiments, the encoder and decoder are backwards compatible with the ITU-T H.264/AVC standard for video encoding, meaning that ITU-T H.264/AVC compliant decoders may correctly decode the bitstream from the encoder described in the present application, while discarding or ignoring the boundary strength information. Similarly, the decoder described in the present application will correctly decode a bitstream from a ITU-T H.264/AVC compliant encoder.

In different embodiments, the boundary strength information may have different granularities. In some embodiments, the boundary strength information may be at a macroblock granularity, containing information on whether a macroblock requires any deblocking or not. In some embodiments, the boundary strength information may alternatively or also contain information on whether deblocking is required for horizontal or vertical boundaries within a macroblock. In yet other embodiments, the boundary strength information may include information on which particular horizontal or vertical boundaries within the macroblock require deblocking. In yet further embodiments, the boundary strength information may include information regarding which particular transform block boundaries require deblocking. In yet further embodiments, the boundary strength information may include information regarding boundary strength values for particular transform block boundaries. In one embodiment, the boundary strength information includes a boundary strength map for the slice of video.

In the description that follows, the terms frame and slice are used somewhat interchangeably. Those of skill in the art will appreciate that, in the case of the H.264 standard, a frame may contain one or more slices. It will also be appreciated that certain encoding/decoding operations are performed on a frame-by-frame basis and some are performed on a slice-by-slice basis, depending on the particular requirements of the applicable video coding standard. In any particular embodiment, the applicable video coding standard may determine whether the operations described below are performed in connection with frames and/or slices, as the case may be. Accordingly, those ordinarily skilled in the art will understand, in light of the present disclosure, whether particular operations or processes described herein and particular references to frames, slices, or both are applicable to frames, slices, or both for a given embodiment.

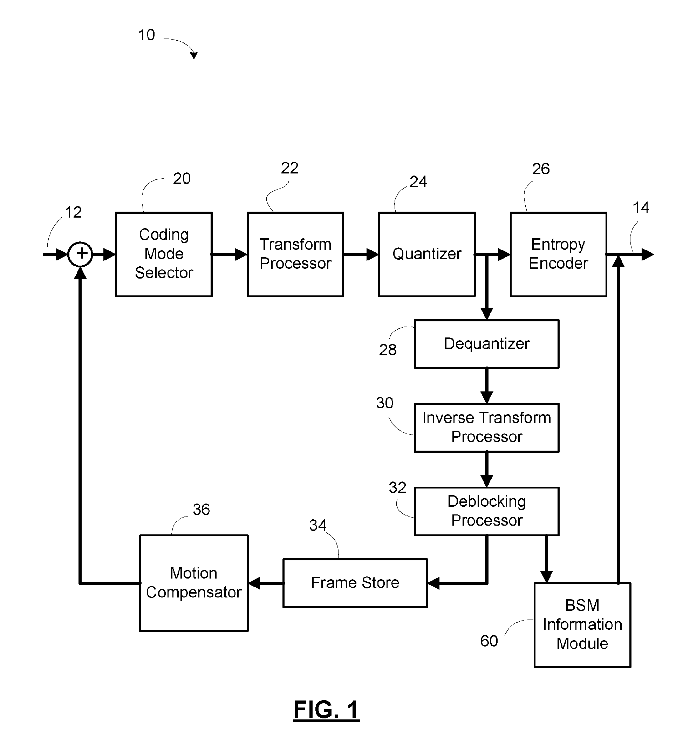

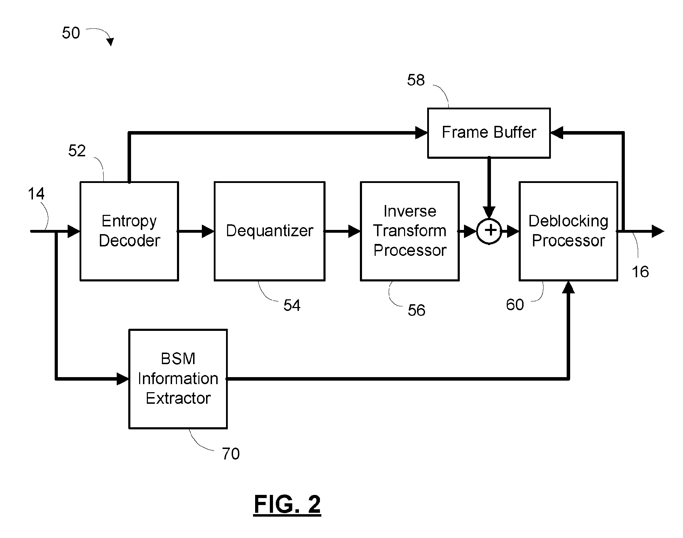

Reference is now made to Figure 1, which shows, in block diagram form, an encoder 10 for encoding video with in-loop deblocking. Reference is also made to Figure 2, which shows a block diagram of a decoder 50 for decoding video with in-loop deblocking.

The encoder 10 receives a video source 12 and produces an encoded bitstream 14. The decoder 50 receives the encoded bitstream 14 and outputs a decoded video frame 16. The encoder 10 and decoder 50 may be configured to operate in a manner compatible with any one or more of a number of video compression standards. For example, the encoder 10 and decoder 50 may be substantially H.264/AVC compliant. In other embodiments, the encoder 10 and decoder 50 may conform to other video compression standards, including evolutions of the H.264/AVC standard.

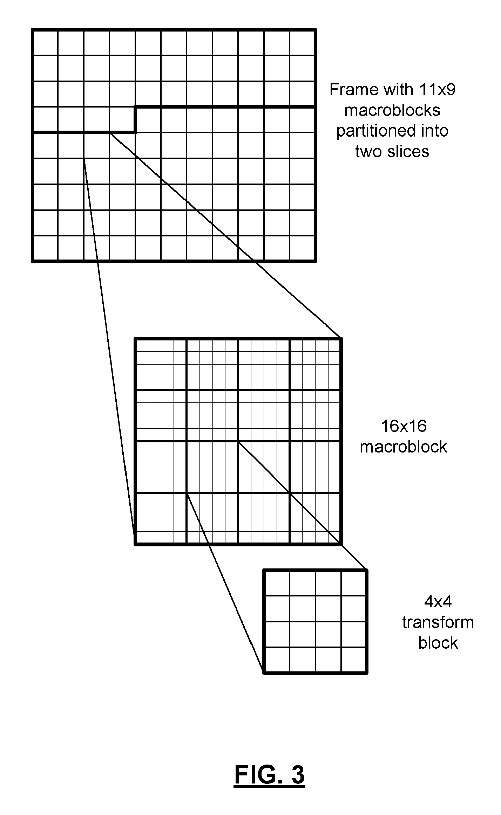

The encoder 10 includes a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular macroblocks within the frame/slice are inter or intra coded. The transform processor 22 performs a transform upon the spatial domain residual data. For example, in many embodiments a discrete cosine transform (DCT) is used. The transform is performed on a macro-block or sub-block basis, depending on the size of the macroblocks. In the H.264 standard, for example, a typical 16x16 macroblock contains sixteen 4x4 transform blocks and the DCT process is performed on the 4x4 blocks, as illustrated graphically in Figure 3. In some cases, the transform blocks may be 8x8, meaning there are four transform blocks per macroblock.

The resulting coefficient matrix for each block is quantized by the quantizer 24. The quantized coefficients and associated information are then encoded by the entropy encoder 26.

The H.264 standard also prescribes the use of motion compensation to take advantage of temporal prediction. Accordingly, the encoder 10 has a feedback loop that includes a de-quantizer 28, inverse transform processor 30, and deblocking processor 32. These elements mirror the decoding process implemented by the decoder 50 to reproduce the frame/slice. A frame store 34 is used to store the reproduced frames. In this manner, the motion compensation is based on what will be the reconstructed frames at the decoder 50 and not on the original frames, which may differ from the reconstructed frames due to the lossy compression involved in encoding/decoding. A motion compensator 36 uses the frames/slices stored in the frame store 34 in comparison to source frames/slices. Those ordinarily skilled in the art will appreciate the details and possible variations for implementing H.264 encoders.

The decoder 50 includes an entropy decoder 52, dequantizer 54, inverse transform processor 56 and deblocking processor 60. A frame buffer 58 supplies reconstructed frames for motion compensation purposes.

The decoder 50 performs "in-loop deblocking", meaning that both the encoder and decoder perform the same deblocking process. In-loop deblocking is prescribed in the H.264 standard. Although applied after decoding of the frame is completed, the deblocking prescribed in H.264 is considered to be "in-loop" because it is applied before the frame is used as a reference frame for motion compensation, which means it is applied within the decoding loop for other blocks that rely upon the deblocked frame. In-loop deblocking may be compared to "post-processing" deblocking, where it is applied to the pixels of a frame after the reconstructed frame is complete and wherein the pre-deblocking frame is used as a reference for other blocks. Because the deblocking process is "in-loop", the same deblocking process must be applied at the encoder 10 as at the decoder 50 so that the motion compensation performed at the encoder 10 is using the same reference frames as will be available to the decoder 50.

The deblocking process, at both the encoder 10 and decoder 50, involves determining whether to apply a deblocking filter to a particular transform block. To determine whether to deblock a particular transform block, the deblocking process assesses the "boundary strength" between transform blocks. In other words, it builds a Boundary Strength Map (BSM) or matrix of values in which a BSM value is assigned to each 4 pixel long border between each 4x4 block. The BSM values may range from 0 to 4, where 0 indicates no deblocking filter need be applied, and non-zero values indicate deblocking is to be applied in accordance with the filter specifics defined in the H.264 standard.

The determination of boundary strength is made using a decision tree in which the necessary conditions for boundary strength 4 are first tested. If not satisfied, then the conditions for boundary strength 3 are tested and, if not satisfied, then the conditions for boundary strength 2 are tested, and so on, until and unless it is found that none of the conditions are satisfied, in which case the boundary strength is set to 0. Most boundary strengths end up set to 0, meaning that the entire decision tree must be traversed for the majority of cases even though no deblocking filter ends up being applied in those cases.

The convention for pixel labeling at the boundary of transform block, whether vertical or horizontal, is as follow:

| | | | | | | | |
|---|---|---|---|---|---|---|---|
| p3 | p2 | p1 | p0 | q0 | q1 | q2 | q3 |

where p3, p2, p1, p0 are the pixels to the left/top of the block boundary, and q0, q1, q2, q3 are the pixels to the right/below the block boundary.

A simplified summary of conditions for determining boundary strength is set out in the table below:

| **Boundary Strength** | **Conditions** | |
|---|---|---|
| 4 | Either p0 or q0 are within intra-coded blocks and the boundary is a macroblock boundary | |
| 3 | Both p0 and q0 are within intra-coded blocks and the boundary is not a macroblock boundary | |
| 2 | One of the blocks has coded residuals (*i.e.* the quantized coefficients are not all zero) | |
| 1 | One of the following conditions is true: | |
| | ■ | The blocks rely on different reference frames |
| | ■ | The motion vector different between the two blocks is greater than 1 luminance sample |
| 0 | All other cases | |

The testing of these conditions for each transform block boundary in a frame is a computationally intensive process. In some estimates, the process of finding the boundary strength information for each transform block boundary accounts for one third of the computational power consumed by the deblocking process, whereas the actual application of the deblocking filter to those pixels that require deblocking consumes approximately two-thirds of the power consumed by the deblocking process. The deblocking process itself accounts for approximately one third of the power consumed in the entire decoding process. This means that the determination of boundary strength information accounts for approximately 10% of the computational load attributed to decoding. It will be appreciated that the actual power consumption and relative power consumption is dependent upon the source data since different data will require different deblocking intensity.

In the H.264 standard, and in similar encoding/decoding processes, the deblocking is performed "in-loop", meaning that the encoder performs the deblocking process as well as the decoder. Accordingly, with reference to Figures 1 and 2 again, the encoder 10 according to the present application includes a BSM information module 60 for obtaining at least some boundary strength information from the deblocking processor 32 at the encoder 10. The BSM information module 60 may, in some embodiments, filter or otherwise modify or encode the boundary strength information, as will be described in greater detail below. The boundary strength information is transmitted from the encoder 10 to the decoder 50. In some embodiments, the boundary strength information may be embedded within the bitstream 14. In other embodiments, it may be sent separately.

The decoder 50 includes a BSM information extractor 70 for receiving the BSM information sent by the encoder 10. If the BSM information is contained within the bitstream 14, then BSM information extractor 70 extracts it from the bitstream 14 and inputs it to the deblocking processor 60. Accordingly, the deblocking processor 60 is configured to use the BSM information supplied by the BSM information extractor 70 to reduce the number of calculations required to determine the boundary strength map for a particular frame/slice.

Although illustrated in Figures 1 and 2 as separate modules or components, it will be appreciated that in some embodiments the BSM information module 60 and/or BSM information extractor 70 may by implemented as part of other components, such as the entropy encoder 26 and decoder 52 respectively. It will also be understood that the encoder 10 and decoder 50 are structured or configured to ensure that the BSM information is appropriately associated with bitstream data for its corresponding frame/slice.

In one embodiment, the encoder 10 and BSM information module 60 may be configured to send the entire boundary strength map for a given frame. The boundary strength map contains the boundary strength of each boundary in the frame. In this embodiment, the decoder is relieved of any requirement to determine boundary strength values for the frame. However, it will be appreciated that sending the entire boundary strength map may be taxing in terms of bandwidth usage and in terms of radio power consumption at the encoder 10 and decoder 50. Therefore, many embodiments will send less than the entire boundary strength map.

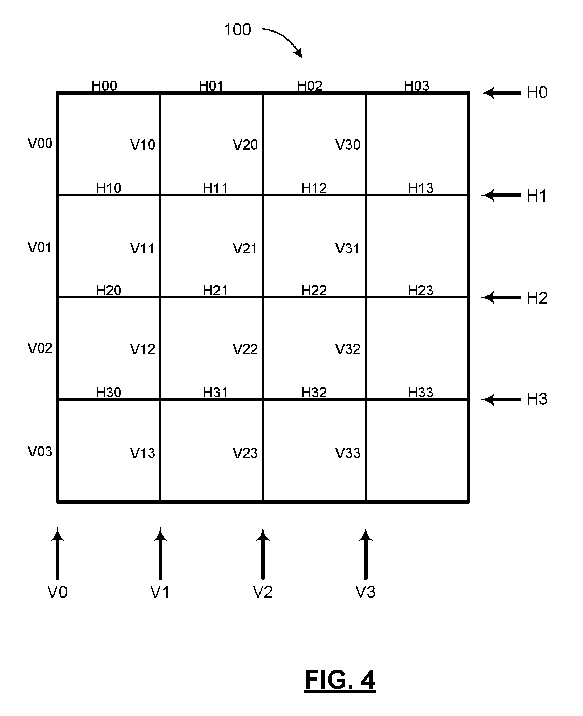

Reference is now made to Figure 4, which diagrammatically shows an example 16x16 macroblock 100. The macroblock 100 may be divided into sixteen 4x4 transform blocks. Deblocking filtering for a given transform block is based upon the boundary strengths on the left and top borders of the block. Accordingly, there are four vertical boundaries V0, V1, V2, and V3 and four horizontal boundaries H0, H1, H2, and H3 that are assessed. In each of those boundaries, there are four segments, *e.g*. V01, V02, V03, and V04, that each receive their own boundary strength value. Accordingly, for each macroblock there are 32 boundary strength values to be determined and up to 32 block boundaries to be deblocked.

In the majority of cases, the boundary strength values are zero. However, the decision process is such that the value of zero is only arrived at after traversing the entire decision tree, since it is a default value once the determination is made that none of the conditions attached to the other boundary strength values are met. Therefore, information regarding which boundary strength values are zero is the most helpful information in terms of avoiding computational effort at the decoder.

A hierarchy of BSM information reflecting different granularities is defined below, beginning with the greatest level of abstraction, *i.e.* the coarsest granularity.

### Level 1- The macroblock level

In a first coarsest level of granularity, the BSM information may be sent on a macroblock-basis. In this level of the hierarchy, a macroblock is assigned an overall BSM value of zero if all boundaries within the macroblock have a BSM value of zero. If any of the boundaries within the macroblock have a non-zero BSM value, then the macroblock is given a value of 1. Therefore, in this embodiment, the BSM information module 60 (Fig. 1) within the encoder 10 creates a macroblock BSM map containing a binary value for each macroblock. This data is then encoded and/or sent to the decoder 50, which is then able to identify whether it needs to calculate boundary strength values for a particular macroblock based on the macroblock BSM map.

This hierarchy level is based on the following observations: 1) the macroblock data structure is the basic processing unit for deblocking; 2) the block boundary positioning information could be obtained implicitly from the macroblock data structure; 3) the macroblock is big enough to encapsulate 32 boundary strengths, while at the same time, small enough to cover only a small area of the video frame, corresponding to part of a moving object; 4) based on the translation model for motion estimation/compensation, it is highly probable that all the pixels within an macroblock have similar gray levels, and same amount of motion; and 5), the boundary strength values within a macroblock tend to have the same value, and the same type of filter tends to be used for deblocking.

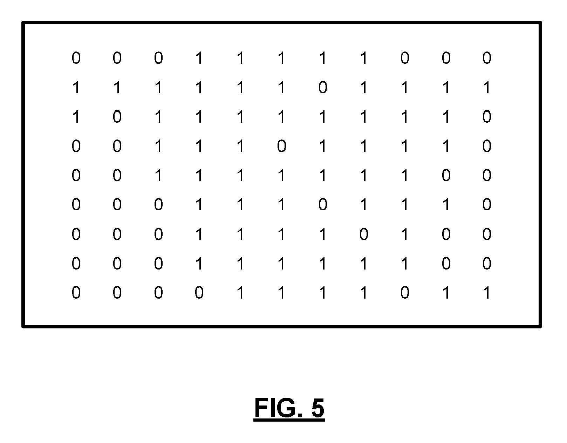

Reference is now made to Figure 5, which shows an example macroblock BSM map for a frame of video. In particular, the macroblock BSM values shown in Figure 5 are obtained from frame 4 of the QCIF *Foreman* sequence, encoded with quantizer parameter qp fixed at 35.

It will be observed from Figure 5 that: 1) the percentage of all-zero macroblock BSM values accounts for around half of the total macroblocks, and these macroblocks do not need to be deblocked; 2) for those macroblocks that do need deblocking, they are clustered together. This is due to the fact that for natural scene videos, the pixel values are highly correlated. In the example of the *Foreman* sequence, those areas correspond to a moving head, while the all-zero areas correspond to the stationary background. This fact could be employed for the coding of the BSM, by using higher order conditional models.

Based on testing different types of video sequences with different kinds of motion activities, two statistical values have been noted. First, the average percentage of all-zero BSM macroblocks that could be skipped for deblocking; and second, in order to signal this information, how many bits are needed on average per frame. For example, for the *Foreman* sequence, around half of the total macroblocks on average do not need to be deblocked. In order to describe the BSM at this level, the encoder may employ a complex 3^{rd} order context model, and achieve a compressed BSM having a size less than 3% that of the video bitstream. In the example of a QCIF format sequence assuming 30 fps, which has 11x9 = 99 macroblocks, this translates into a bandwidth requirement of 1.6 kbps.

The *Foreman* sequence has complex motion activities. For other test sequences with less motion complexity, the percentage of all-zero BSM macroblocks is much higher, and the number of coding bits to represent the BSM info at this level is much lower. For example, for the *Container* sequence, the percentage of all-zero BSM macroblocks reaches above 90%. At the same time, the bandwidth requirement for the BSM transmission is around half that of the *Foreman* sequence, at 0.8 kpbs.

### Level 2 - The XlY level

In this embodiment, a second hierarchy of BSM information is provided. For any macroblock of BSM value of 1 the BSM information also contains an X-bit and a Y-bit to indicate whether there are non-zero boundary strength values in the horizontal or vertical boundaries. Referring again, by way of example, to Figure 4, the horizontal boundaries, or X-direction, includes H0, H1, H2, and H3. The vertical boundaries, or Y-direction, includes V0, V1, V2, and V3. If any of H0, H1, H2, or H3 contain non-zero boundary strength values then the X-bit is set to 1. Similarly, if any of V0, V1, V2, or V3 contain non-zero boundary strength values then the Y-bit is set to 1.

The inventors have noted that there is often less redundancy to be exploited for coding at this level. Moreover the percentage difference among different test sequences is not as pronounced. Accordingly, the coding demands for this hierarchy are more significant; sometimes more than triple the number of bits required than at the first level. The computational savings from sending this level of BSM information can be reasonably significant. In some cases, around a tenth of computational power may be saved from avoiding BSM calculations due to the level 2 BSM information in addition to the savings from the level 1 information.

Using the *Foreman* sequence as an example again, the bandwidth requirement for the level 2 BSM information is around 6% that of the video bitstream. The computational savings from providing the level 2 information to the decoder is approximately 10% as compared to computing the BSM information at the decoder in this example.

### Level 3 - The Block Boundary level

In this embodiment, a third hierarchy of BSM information is provided. For any X or Y direction that has a non-zero boundary strength value, the BSM information also contains four bits to indicate which of the four boundaries in that direction contain non-zero boundary strength values. Referring still, by way of example, to Figure 4, the horizontal boundaries, or X-direction, includes H0, H1, H2, and H3. The vertical boundaries, or Y-direction, includes V0, V1, V2, and V3. If the level 2 BSM information indicates that the X-direction requires deblocking, *i.e.* if the X-bit is set to 1, then the level 3 BSM information includes four bits to indicate whether H0, H1, H2, or H3 contain non-zero boundary strength values. Similarly, if the level 2 BSM information indicates that the Y-direction requires deblocking, *i.e.* the Y-bit is set to 1, then the level 3 BSM information includes four bits to indicate whether V0, V1, V2, or V3 contain non-zero boundary strength values.

As an example, referring to Figure 4, suppose that all the boundary strength values are 0 except for V02, H02 and H31. The level 1 BSM information for the macroblock would indicate that the macroblock contains a non-zero boundary strength value because the macroblock BSM value would be set to 1. The level 2 BSM information would contain the bits 11, since both the X and Y directions contain non-zero boundary strength values. The level 3 BSM information for the X-direction would contain 1001, since the H02 and H31 block boundaries result in non-zero values in the first and fourth horizontal boundaries. The Y-direction BSM information would contain 1000, since V02 results in a non-zero BSM value in the first vertical boundary.

Based on sample studies, the inventors have found that the percentage of all zero block boundaries that are captured by the BSM information at level 2 is over 60 % of the all zero block boundaries that are captured by the BSM information at level 3. In some example frames, it is as much as 98%. Accordingly, the gains from this hierarchy level in terms of additional information to avoid computational load are somewhat modest, and the number of bits required to encode this data is fairly significant, especially since there is little information redundancy left to exploit at level 3.

Using the *Foreman* sequence as an example again, it takes about 245 bits to encode the level 3 data. A computational reduction of 60% is realized by the first and second hierarchies (levels 1 and 2) combined. A further 20% is realized by sending the level 3 data. Nevertheless, the bandwidth requirements are not insignificant. Assuming a playback rate at the decoder of 30 fps, the level 3 data requires a transmission bandwidth of 6 kbps.

It will be appreciated that additional hierarchal levels may be defined providing additional detail. For example, a fourth level may be defined specifying which of the block boundaries within a particular boundary contain a non-zero boundary strength value. For example, if a boundary (*e.g.* V1) has a non-zero value, information may be sent on whether the non-zero value appears in V10, V11, V12, or V13. In a further embodiment, actual BSM values may be included in the BSM information. For example, whether a particular boundary strength is 0, 1, 2, 3, and/or 4.

It will also be appreciated that different hierarchies of boundary strength information may be defined. For example, at the second level, the macroblock could be broken into 8x8 sub-blocks and information sent regarding the subblocks. In this example, the macroblock would contain subblocks 0, 1, 2, and 3. Subblock 0, for example, would represent the upper left quarter of the macroblock containing boundaries H00, H01, H10, H11, and V00, V01, V10, and V11.

### BSM value filtering

In addition to the embodiments described above for sending different hierarchies of BSM information, the BSM information may be filtered or simplified before it is sent. In particular, it will be recalled that there are five defined BSM values, 0, 1, 2, 3 and 4. It will also be recalled that the condition for BSM value 4 requires that either the *p0* or *q0* pixel be within intra-coded blocks and the boundary is a macroblock boundary, and that the condition for BSM value 3 is that both *p0* and *q0* are within intra-coded blocks and the boundary is not a macroblock boundary. Accordingly, BSM values 3 and 4 only arise when a macroblock is intra-coded. The macroblock coding type is contained in the macroblock syntax header, meaning that the decoder is already aware if the conditions are present to permit levels 3 and 4. Accordingly, in this embodiment, the values 3 and 4 are filtered from the BSM and replaced with zeros. At the decoder, if intra-coded macroblocks are encountered, then the decoder knows it should test to see whether the conditions for BSM 3 or 4 are met for any boundaries in or next to those intra-coded macroblocks.

This reduction of the BSM values not only reduces the alphabet size if the BSM values are compressed and sent, but also cuts two levels of the boundary strength decision tree. After removing two boundary strength values from the BSM, now we have only three values of boundary strength, *i.e.* 0, 1 and 2.

This BSM filtering operation may be applied in combination with the BSM information hierarchies described above. Indeed, the examples given above for the *Foreman* sequence include the use of BSM filtering on this basis.

### Transmission of BSM information

As noted above in connection with Figures 1 and 2, the encoder 10 sends the BSM information to the decoder 50. The BSM information may be inserted into the bitstream 14 or may be sent in a separate message.

In some example embodiments, the encoder 10 and decoder 50 are configured to operate in accordance with a particular video encoding standards, such as H.264/AVC. The particular standard prescribes the type of information contained in the bitstream 14. Known standards do not include boundary strength information in the bitstream 14. Accordingly, the present application may appear to raise a compatibility issue with known standards; however, some standards offer "generic" or "customizable" fields within the bitstream 14 that may be used to send side information from an encoder to a decoder.

The H.264/AVC standard, in particular, defines user data supplemental enhancement information (SEI) messages, which are transmitted along with the video bitstream 14. In some embodiments of the present application, where the encoder 10 and decoder 50 are configured in accordance with H.264/AVC, the BSM information is transmitted in SEI messages. In particular, an SEI message with sei_payload type 5 (user_data_unregistered) may be used for the transmission of BSM information. For two-way communications, the negotiation of this type of message is signalled before the communications start, and once this BSM SEI message is accepted by the decoder 50, the H.264 encoder 10 may start sending the SEIs together with the video bitstream. For broadcasting communications, the encoder 10 sends out the SEIs together with the video bitstream 14; for decoders having no knowledge of the BSM SEI, only the video bitstream 14 part is decoded; and for decoders 50 that are capable of interpreting the BSM SEI, both the SEI message and the video bitstream 14 are decoded, and the BSM information in the SEI message is used to assist the decoding of the video bitstream 14.

In some embodiments, the encoder 10 and/or decoder 50 may be configured to use a preset hierarchy level when sending BSM information. In other words, the encoder 10 may be configured to always send up to level 3 BSM information as necessary.

In some other embodiments in which there are two-way communications, the encoder 10 and decoder 50 may negotiate and set a hierarchy level for BSM information before initiating the video transmission. A decoder with limited processing power may request a greater amount of BSM information. Conversely, if the transmission medium offers limited bandwidth, or if the use of additional bandwidth is costly, the encoder/decoder may agree on a lesser degree of BSM information.

In yet other embodiments, such as in a broadcast embodiment, the encoder 10 may preselect a hierarchy level for a given video prior to initiating the encoding process. The selection may be based on statistics associated with the video from which the encoder might evaluate the likely necessity for different levels of BSM information. For example, the encoder 10 might choose lesser BSM hierarchy levels for new programs, which feature small movements of the anchorperson; and the encoder 10 might choose greater BSM hierarchy levels for sports programs, which feature significant movements. From overall statistics for the video, the encoder 10 may determine the likely computational savings from sending an additional hierarchy level of BSM information and whether the computational savings would be justified given the additional encoding cost. The selection may also take into account the nature of the transmission channel. For example, limitations on bandwidth would tend to discourage sending additional BSM information. The encoder may evaluate an optimization relationship between probably computational load savings and probably bandwidth cost. The optimization relationship may be expressed as a Lagrangian relation and solved based on the statistics of a particular video.

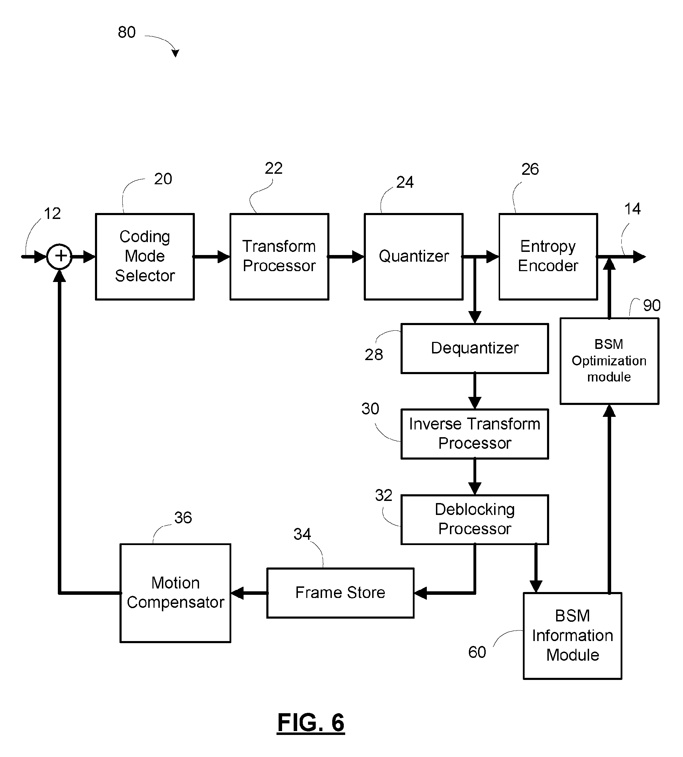

In yet a further embodiment, the optimization decision on how much information to send as BSM information may be made on a frame-by-frame basis. Reference is now made to Figure 6, which shows an encoder 80 similar to the encoder 10 shown in Figure 1. The encoder 80 includes a BSM optimization module 90 which determines, based on bandwidth information and the BSM information from the BSM information module 60, what hierarchy of information should be sent to the decoder 50. For a given frame, the BSM information module 60 and/or BSM optimization module 90 may assess the information redundancy for different hierarchies of BSM information, the number of bits required to encode the different hierarchies of BSM information, the bandwidth required to transmit those bits, the computational power savings at the decoder attributable to the different hierarchies of BSM information, and the radio power costs to the decoder in receiving the additional BSM information. Based on this data, expressed as a Lagrangian optimization, the BSM optimization module 90 determines at what hierarchy to encode and send BSM information for the given frame.

Other optimizations over slightly different quantities may also be employed to make frame-by-frame decisions on the hierarchy at which to send BSM information for a given frame.

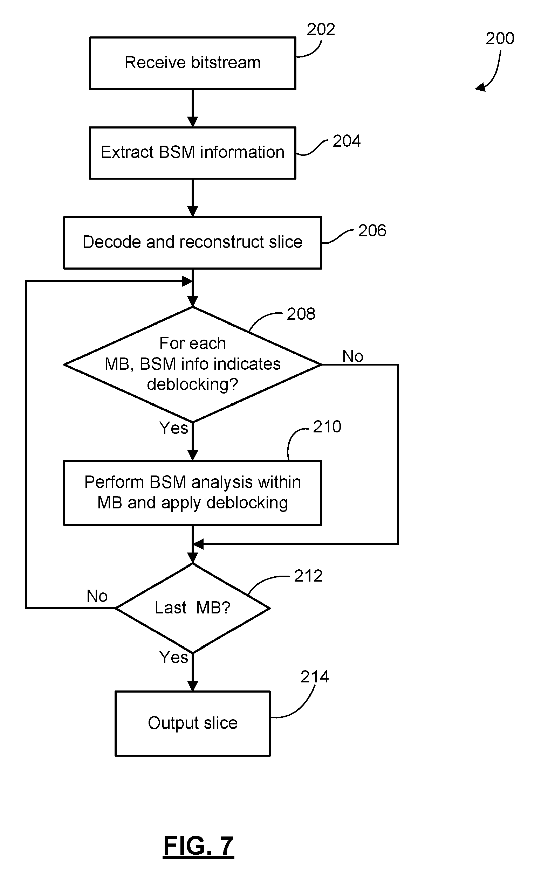

Reference is now made to Figure 7, which shows an example method 200 of performing decoding in accordance with the present application. The example method 200 implements the level 1 hierarchy of BSM information sharing. The method 200 begins in step 202 with receipt of a bitstream from an encoder. The bitstream includes encoded video and associated BSM information. The BSM information may also be encoded.

In step 204, the BSM information is extracted (and decoded, if applicable) from the bitstream. In step 206, the decoder decodes the encoded video. In one example, the video is encoded in accordance with H.264 and the decoder's decoding process is H.264 compliant. The decoding process permits the decoder to reconstruct the slice of video. Those ordinarily skilled in the art will be familiar with the detailed operations involved in the process of decoding encoded video.

In step 208, the decoder assesses, for each macroblock, whether the BSM information indicates that deblocking is required. As outlined above, in this embodiment the BSM information indicates on a macroblock-by-macroblock basis whether at least one boundary within the macroblock has a non-zero boundary strength value and, thus, that deblocking of that boundary should occur. If the BSM information indicates that the macroblock contains at least one boundary that requires deblocking, then the method 200 proceeds to step 210, where the deblocking process is applied to the macroblock. The deblocking process indicated in step 210 may include performing the boundary strength analysis of the macroblock that will identify which of the specific transform block boundaries within the macroblock require deblocking, and the subsequent application of deblocking filters to any such boundaries. Those ordinarily skilled in the art will be appreciate the operations involved in such analysis and the application of such filters, for example as specified in the H.264 standard.

If, in step 208, the BSM information indicates that the macroblock does not require deblocking, then the method 200 skips step 210, and the computational demands associated with step 210, and proceeds to step 212. In step 212, the decoder assesses whether there are further macroblocks in the slice. If so, it returns to step 208. Otherwise, it outputs the deblocked slice as indicated in step 214.

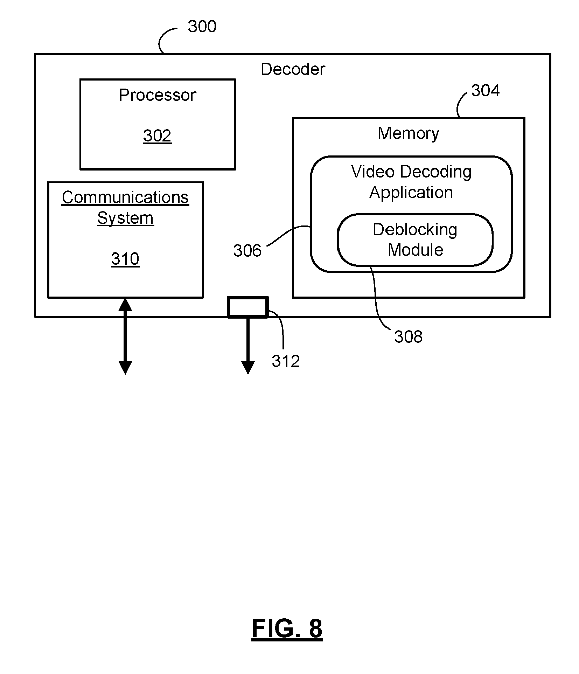

Reference is now also made to Figure 8, which shows a simplified block diagram of an example embodiment of a decoder 300. The decoder 300 includes a processor 302, a memory 304, and a video decoding application 306. The video decoding application 306 may include a computer program or application stored in memory 304 and containing instructions for configuring the processor 302 to perform steps or operations such as those described herein. For example, the video decoding application 306 may decode and display video bitstreams encoded using the H.264 standard. The video decoding application 306 may include a deblocking component or module 308 configured to receive BSM information within a video bitstream and to employ the BSM information in determining whether a particular macroblock, transform block, or boundary requires further BSM analysis and/or deblocking, as described herein. It will be understood that the video decoding application 306 and/or the deblocking module 308 may be stored in on a computer readable medium, such as a compact disc, flash memory device, random access memory, hard drive, etc.

The decoder 300 also includes a communications system 310 for sending and receiving communications. In particular, the communications system 310 receiving an incoming bitstream containing encoded video data. The decoder 300 may also include an output port 312 for outputting the reconstructed frame/slice. In some embodiments, the decoder 300 may include a display device (not shown), and in others it may supply the decoded frame/slice data to a display device via the output port 312.

It will be appreciated that the decoder and/or encoder according to the present application may be implemented in a number of computing devices, including, without limitation, servers, suitably programmed general purpose computers, set-top television boxes, television broadcast equipment, and mobile devices. In particular, implementation of the decoder within mobile electronic devices may prove advantageous given the limited processing and memory resources available in a mobile electronic device, and the increasing use of such devices to receive and view video media.

Certain adaptations and modifications of the described embodiments can be made. Therefore, the above discussed embodiments are considered to be illustrative and not restrictive.

## Claims

1. A method of decoding a slice of video, comprising:
receiving (202) a bitstream (14) of encoded video and at least some associated boundary strength information; and
decoding the encoded video to reconstruct the slice of video, including determining (208) whether to apply a deblocking filter (60) to transform block edges within the slice, wherein for at least one of the transform blocks the determination of whether to apply the deblocking filter is based on the received associated boundary strength information.

2. The method claimed in claim 1, wherein the received associated boundary strength information includes information, for each macroblock (100) in the slice, indicating whether that macroblock (100) contains at least one transform block boundary requiring deblocking.

3. The method claimed in claim 2, wherein each macroblock (100) contains two or more horizontal boundaries and two or more vertical boundaries and wherein the received associated boundary strength information includes information for at least one macroblock (100) indicating whether the horizontal boundaries require deblocking and whether the vertical boundaries require deblocking.

4. The method claimed in claim 3, wherein the received associated boundary strength information includes information for at least one macroblock (100) indicating which horizontal boundary or vertical boundary requires deblocking.

5. The method claimed in claim 1, wherein the received associated boundary strength information includes encoder information obtained from an encoder-generated boundary strength map (60) for the slice, and wherein determining includes building a decoder-generated boundary strength map for the slice, and wherein at least one value within the decoder-generated boundary strength map is set based on the encoder information.

6. The method claimed in any one of claims 1 to 5, wherein decoding comprises:
entropy decoding (52) the bitstream to output quantized coefficients;
dequantizing (54) the quantized coefficients to produce transform domain coefficients;
calculating an inverse transform (56) of the transform domain coefficients to output video data for the slice of the video;
deblocking the video data (60) using the deblocking filter to generate deblocked video data, wherein the deblocking filter is applied to transform block edges based on the determination; and
outputting the deblocked video data (16) as the slice of the video.

7. The method claimed in any one of claims 1 to 6, wherein the bitstream of encoded video is encoded is backwards compatible with the ITU-T H.264/AVC video encoding protocol.

8. The method claimed in any one of claims 1 to 7, wherein the received associated boundary strength information includes information regarding at least some boundaries having a boundary strength value of 0.

9. The method claimed in claim 8, wherein determining includes identifying boundaries having a boundary strength value of 0 based on the associated boundary strength information, determining which of the identified boundaries are between at least one intra-coded transform block, and testing whether conditions for boundary strength 3 or 4 are met for any such boundaries.

10. A decoder for decoding a slice of video, comprising:
a processor (302);
a memory (304);
a communications system (310) for receiving the bitstream (14) of encoded video and at least some associated boundary strength information; and
a decoding module (306) stored in memory and containing instructions for configuring the processor (302) to decode the encoded video to reconstruct the slice of video in accordance with the method claimed in any one of claims 1 to 9.

11. A mobile electronic device, comprising a display screen and the decoder of claim 10, wherein the communication system (310) includes a wireless communication system.

12. A method of transmitting a slice of video, comprising:
encoding (10) the slice of video in accordance with a video encoding protocol to create a bitstream (14), wherein the video encoding protocol specifies in-loop deblocking at the decoder, and wherein encoding includes applying deblocking (32) to the slice of video in a motion compensation loop, the deblocking (32) including calculating boundary strength information (60) for the slice of video; and
transmitting the bitstream (14) and at least some associated boundary strength information.

13. The method claimed in claim 12, wherein the transmitted associated boundary strength information includes information for each macroblock (100) in the slice indicating whether it contains at least one transform block border requiring deblocking.

14. The method claimed in claim 13, wherein each macroblock (100) contains two or more horizontal boundaries and two or more vertical boundaries and wherein the transmitted associated boundary strength information includes information for at least one macroblock (100) indicating whether the horizontal boundaries require deblocking and whether the vertical boundaries require deblocking.

15. The method claimed in claim 14, wherein the transmitted associated boundary strength information includes information for at least one macroblock (100) indicating which horizontal boundary or vertical boundary requires deblocking.

16. The method claimed in claim 12, wherein the video encoding protocol is ITU-T H.264/AVC and wherein the transmitted associated boundary strength information includes information regarding at least some boundaries having a boundary strength value of 0.

17. The method claimed in claim 16, further including filtering the calculated boundary strength information by setting boundary strength values of 3 and 4 to 0.

18. The method claimed in claim 12, wherein the bitstream contains the at least some associated boundary strength information.

19. An encoder for encoding a slice of video, the encoder comprising:
a processor;
memory;
a communications system; and
an video encoding module (10) stored in memory and containing instructions for configuring the processor to encode the slice of video in accordance with the method of any one of claims 12 to 19.
